# EUROPEAN PATENT APPLICATION

(11) **EP 4 756 048 A1**
(43) Date of publication of application: **10.06.2026**
(21) Application number: 24848926.2
(22) Date of filing: 17.07.2024
(51) Int. Cl.: C22C 1/08, B32B 15/01

(54) **TITANIUM LAMINATE, AND METHOD FOR PRODUCING TITANIUM LAMINATE**

(30) Priority: 31.07.2023 JP 2023124807
(71) Applicant: Toho Titanium CO., LTD., Chigasaki-shi Kanagawa 253-8510 (JP)
(72) Inventor: MATSUMOTO,Yosuke, Chigasaki-shi, Kanagawa 253-8510 (JP); INOUE,Yosuke, Chigasaki-shi, Kanagawa 253-8510 (JP); TAKADA,Motomu, Chigasaki-shi, Kanagawa 253-8510 (JP); TSUMAGARI,Shogo, Chigasaki-shi, Kanagawa 253-8510 (JP)
(74) Representative: Mewburn Ellis LLP
(86) International application number: PCT/JP2024/025677
(87) International publication number: WO 2025/028271

(57) **Abstract**

A titanium laminate according to this invention is in sheet form and includes a plurality of titanium gas-liquid permeable layers, each having pores through which a gas and/or a liquid can pass, the gas-liquid permeable layers being laminated by bonding adjacent titanium bonding surfaces together in a lamination direction, wherein at least the gas-liquid permeable layer forming one laminate surface of the plurality of gas-liquid permeable layers is a porous layer having a thickness of 500 µm or less, and wherein, on the one laminate surface, an average value of areas of pores opening to the laminate surface is 4 µm² or more and 17 µm² or less, a standard deviation value of the areas of the pores is 20 µm² or less, and a number of pores present within a rectangular region having an area of 22 000 µm² and an aspect ratio of 4:3 is 120 or more, and wherein, on the other laminate surface located on a back side of the one laminate surface, an average value of areas of pores opening to the laminate surface is three times or more the average value of the areas of the pores opening to the one laminate surface.

## Description

### [Technical Field]

The present invention relates to a titanium laminate in sheet form having a porous layer, and to a method for producing the titanium laminate.

### [Background Art]

A titanium porous body produced by sintering titanium powder or titanium fibers has gas or liquid permeability due to its pores, and also exhibits electrical conductivity, and high corrosion resistance resulting from the formation of a passive film on its surface.

A titanium porous body having such properties has been studied for use as a porous transport layer (PTL) or the like in an environment where corrosion may occur in a polymer electrolyte membrane (PEM) type water electrolysis device. In particular, hydrogen produced by water electrolysis devices such as the PEM type using electricity derived from renewable energy sources is referred to as "green hydrogen", attracting increasing attention in recent years as efforts toward achieving a decarbonized society accelerate.

Patent Literature 1 discloses: "a sintered metal fiber nonwoven sheet having an overall thickness of less than 1 mm, the sintered metal fiber nonwoven sheet comprising a main layer and at least one auxiliary layer laminated on the main layer and integrally sintered therewith, wherein the main layer is composed of metal fibers each having a diameter of 1 to 10 µm and has a porosity of 80% or more, the auxiliary layer is composed of metal fibers each having a diameter at least twice that of each of the metal fibers of the main layer, the total thickness of the auxiliary layer(s) is less than 2.5 times the thickness of the main layer, and the overall porosity of the sheet including the main layer and the auxiliary layer(s) is equal to or more than 75% and equal to or less than 90%". Patent Literature 1 discloses: "as the materials for the main layer and the auxiliary layer, corrosion-resistant metallic materials such as stainless steel, titanium alloys, nickel alloys, and copper alloys are preferable, and these materials can be suitably used not only for filtration of conventional fluids such as fuel oil, lubricating oil, water, dyes, and inks, but also for filtration of high-temperature liquids, organic solvents, acids, and alkalis".

Patent Literature 2 discloses: a "current collector for a fuel cell" formed by integrating a porous flat plate made of titanium and provided with through-holes, with a titanium matrix portion having voids", and also a "method for manufacturing a current collector for a fuel cell" comprising the steps of: providing a large number of through-holes in a titanium base plate material; laminating the plate material with a titanium base material serving as the matrix portion; applying pressure to the laminated plate material and the base material for the matrix portion; and heating the plate material and the base material for the matrix portion while the pressure is applied". With respect to the "method producing a current collector for a fuel cell" it further discloses that "the step of laminating the plate material and the base material of the matrix portion includes a step of arranging a binder together with the base material of the matrix portion, and further includes a step of removing the binder" and the "the binder is a mixture of a water-soluble alkoxide and boron nitride, and the step of removing the binder includes a removal step using alcohol".

Patent Literature 3 discloses a "method for producing a sheet-shaped porous sintered body, comprising preparing a titanium fiber formed body having a short diameter of 10 to 100 µm and a long diameter of 1 to 10 mm, and then placing a plate material on the above formed body and sintering the formed body while pressing it", in which "a sintered body 61 made of titanium fiber 3 is preferably placed on a sintered substrate 5 which is difficult to be welded even if it is in contact with titanium fibers or titanium alloy fibers".

### [Citation List]

### [Patent Literature]

[Patent Literature 1] Japanese Patent Application Publication No. 2000-129311 A
[Patent Literature 2] Japanese Patent Application Publication No. 2004-185946 A
[Patent Literature 3] Japanese Patent Application Publication No. 2007-70727 A

### [Summary of Invention]

### [Technical Problem]

When a titanium porous body is used as a porous transport layer in a PEM-type water electrolysis device, the titanium porous body may be incorporated while being pressed against the electrolyte membrane. In such a case, if the pores on the surface of the titanium porous body are large, the electrolyte membrane pressed against the porous body may partially enter those pores, causing significant deformation in the vicinity of the pores and potentially damaging the electrolyte membrane. Further, if protrusions are present on the surface of the titanium porous body, they may damage the electrolyte membrane. Such protrusions are often present on the surface of titanium porous bodies that are sintered from fibrous raw materials. Titanium porous bodies produced using fibrous raw materials tend to have large surface pores as described above.

Therefore, from the viewpoint of suppressing damage to the electrolyte membrane, it is desirable that the titanium porous body have small pores opening on the surface facing the electrolyte membrane. Even if the pores are small, sufficient gas or liquid permeability can be achieved when the number of pores is large.

However, if the pores are small throughout the titanium porous body, high gas or liquid permeability cannot be obtained even if a large number of pores are present. Therefore, it has been difficult for a single titanium porous body to significantly improve gas or liquid permeability while suppressing damage to the electrolyte membrane.

An object of this invention is to provide a titanium laminate and a method for producing the titanium laminate which can suppress damage to the electrolyte membrane and can achieve excellent gas and/or liquid permeability.

### [Solution to Problem]

As a result of intensive studies to solve the above problems, the inventors have created a sheet-shaped titanium laminate having a plurality of laminated gas-liquid permeable layers. Here, one surface of the laminate is a gas-liquid permeable layer having a porous layer with relatively small pores opening on the laminate surface so as to suppress damage to an electrolyte membrane when it is pressed against the electrolyte membrane in a PEM-type water electrolysis device. However, in order to ensure sufficient gas or liquid permeability on the one surface of the laminate, the above gas-liquid permeable layer is provided with a relatively large number of pores opening on that one surface formed thereby. Further, to enhance overall gas or liquid permeability of the titanium laminate, the porous layer having small pores on the one surface side is made thin. In contrast, on the opposite surface of the laminate, a gas-liquid permeable layer is placed such that the pores opening on that surface are relatively large.

The titanium laminate according to this invention is in sheet form and includes a plurality of titanium gas-liquid permeable layers, each having pores through which a gas and/or a liquid can pass, the gas-liquid permeable layers being laminated by bonding adjacent titanium bonding surfaces together in a lamination direction, wherein at least the gas-liquid permeable layer forming one laminate surface of the plurality of gas-liquid permeable layers is a porous layer having a thickness of 500 µm or less, and wherein, on the one laminate surface, an average value of areas of pores opening to the laminate surface is 4 µm² or more and 17 µm² or less, a standard deviation value of the areas of the pores is 20 µm² or less, and a number of pores present within a rectangular region having an area of 22 000 µm² and an aspect ratio of 4:3 is 120 or more, and wherein, on the other laminate surface located on a back side of the one laminate surface, an average value of areas of pores opening to the laminate surface is three times or more the average value of the areas of the pores opening to the one laminate surface.

In the titanium laminate described above, it is preferable that the gas-liquid permeable layer forming the one laminate surface has the smallest thickness among the plurality of gas-liquid permeable layers.

In the titanium laminate described above, it is preferable that each of the plurality of gas-liquid permeable layers is a porous layer.

It is preferable that the titanium laminate have a titanium content of 97 mass % or more.

It is preferable that the titanium laminate has an oxygen content of 0.4 mass % or more and 2.0 mass % or less.

It is preferable that, in the titanium laminate, the gas-liquid permeable layer forming the one laminate surface has a thickness of 500 µm or less.

The method for producing the titanium laminate according to this invention is a method for producing a sheet-shaped titanium laminate, the method comprising a bonding step of using a plurality of titanium gas-liquid permeable materials each having pores through which a gas and/or a liquid can pass and including at least a gas-liquid permeable material forming one laminate surface that is a porous material having a thickness of 500 µm or less, and heating the gas-liquid permeable materials to a temperature of 810 °C or higher and 1100 °C or lower while being pressed by sandwiching them between pressing surfaces of opposing pressing members with titanium bonding surfaces of the plurality of gas-liquid permeable materials in contact with each other, thereby bonding the plurality of gas-liquid permeable materials together at the titanium bonding surfaces, wherein, in the bonding step, each of the pressing members used has a pressing surface coated with boron nitride particles by means of a water-free coating agent.

In the above producing method, a coating agent having boron nitride particles dispersed in an organic solvent can be used for a coating of the pressing surface.

In the above producing method, it is preferable that, in the bonding step, graphite pressing members having a coating on the pressing surfaces are used as the pressing members.

In the above producing method, it is preferable that, before bonding in the bonding step, at least on a surface of the porous material of at least the gas-liquid permeable material forming the one laminate surface, an average value of areas of pores opening to the surface is 5 µm² or more and 17 µm² or less, a standard deviation value of the areas of the pores is 20 µm² or less, and a number of pores present within a rectangular region having an area of 22 000 µm² and an aspect ratio of 4:3 is 250 or more.

### [Advantageous Effects of Invention]

According to the titanium laminate of this invention, it is possible to suppress damage to the electrolyte membrane and to achieve excellent gas and/or liquid permeability. The method for producing the titanium laminate of this invention is suitably applicable for producing such a titanium laminate.

### [Description of Embodiments]

Embodiments of the present invention will be described in detail below.

A titanium laminate according to an embodiment of this invention includes a plurality of titanium gas-liquid permeable layers, each having pores through which a gas and/or a liquid can pass, the layers being laminated by bonding adjacent titanium bonding surfaces to each other in a lamination direction. Among the plurality of gas-liquid permeable layers, at least the gas-liquid permeable layer forming one laminate surface is a porous layer having a thickness of 500 µm or less.

The one laminate surface formed by the gas-liquid permeable layer serving as the above porous layer of the titanium laminate has an average value of areas of pores opening to the surface of 4 µm² or more and 17 µm² or less, a standard deviation value of the areas of the pores of 20 µm² or less, and a number of pores of 120 or more existing within a rectangular region having an area of 22 000 µm² and an aspect ratio of 4:3. When the average value and standard deviation value of the areas of the pores opening to the one laminate surface are smaller, the pores opening to the one laminate surface will have relatively small and uniform areas. Therefore, when the titanium laminate is pressed against the electrolyte membrane in the PEM-type water electrolysis device on that surface, occurrence of damage to the electrolyte membrane can be suppressed. In addition, since a relatively large number of pores open to the one laminate surface, the required gas and/or liquid permeability can be ensured on that surface.

In contrast, on the opposite surface of the titanium laminate, a gas-liquid permeable layer is positioned such that the average value of pore area opening on that surface is three times or more that on the one laminate surface. Accordingly, because the gas and/or liquid readily passes through the gas-liquid permeable layer on the opposite surface, the overall gas and/or liquid permeability of the titanium laminate can be significantly improved.

To produce the above titanium laminate, it is necessary to bond and laminate a plurality of titanium gas-liquid permeable materials corresponding to the plurality of gas-liquid permeable layers. However, when the plurality of titanium gas-liquid permeable materials are simply sandwiched between the opposing pressing surfaces of pressing members, and in this state, they are pressed while being heated to a predetermined temperature, the gas-liquid permeable materials made of porous titanium tends to bond to the pressing members, making it difficult to detach the materials from the pressing members. Therefore, in the bonding step according to this embodiment, pressing members each having a pressing surface coated with boron nitride particles are used. The coating of boron nitride particles suppresses the reaction between the material of the pressing member and the titanium gas-liquid permeable material. When pressing members made entirely of boron nitride are used, the boron nitride tends to peel off and adhere to the titanium laminate to roughen the laminate surface when it is removed. However, in this embodiment, since the pressing surfaces of the pressing members are merely coated with boron nitride particles, such problems are unlikely to occur. This enables the production of titanium laminate as described above.

### (Titanium Laminate)

The titanium laminate is made of titanium. When it is made of titanium, the titanium laminate can exhibit high electrical conductivity with an appropriate relative density. The titanium content of the titanium laminate (and each gas-liquid permeable layer) is preferably 97 mass% or more, and more preferably 98 mass% or more. The upper limit of the titanium content may be, for example, 99.8 mass% or less, or 99 mass% or less, although not particularly limited thereto. The titanium content refers to the purity of titanium, taking into account not only metallic components but also impurity gas components such as oxygen. Therefore, the titanium content is determined by subtracting the total content of metallic and impurity components, including gas components, from 100 mass%.

The titanium laminate (particularly the gas-liquid permeable layer of the porous layer on one laminate surface side) may contain Fe as an impurity, and may further contain Ni, Cr, Al, Cu, Zn, and Sn as unavoidable impurities originating from the producing process. The Fe content may, for example, be 0.25 mass% or less. It is preferable that the content of each of Ni, Cr, Al, Cu, Zn, and Sn be less than 0.10 mass%, and that their total content be less than 0.30 mass%.

The oxygen content of the titanium laminate may be 0.4 mass% or more and 2.0 mass% or less, although not particularly limited thereto. The oxygen content of the titanium laminate may also be 1.0 mass% or more and 2.0 mass% or less. The oxygen content can be measured by an inert gas fusion-infrared absorption method.

Excluding the contents of carbon, nitrogen, and oxygen, the titanium laminate may have a purity corresponding to Grade 1 to 4 pure titanium, typically Grade 1 or 2, as defined in JIS H 4600 (2012).

The titanium laminate is in sheet shape and includes a plurality of titanium gas-liquid permeable layers. The plurality of gas-liquid permeable layers are laminated by bonding them to each other at adjacent titanium bonding surfaces in the lamination direction. When the titanium laminate is produced by the production method described later, the titanium bonding surfaces of the titanium gas-liquid permeable materials are bonded together, so that in the titanium laminate, the titanium bonding surfaces exist in a bonded state. It is preferable that the interfaces between the plurality of gas-liquid permeable layers be substantially free from metals other than titanium or compounds that do not containing titanium, since this allows the required high electrical conductivity to be achieved at low cost. This is because providing a layer containing another metal, such as platinum, between the gas-liquid permeable layers to suppress the increase in interfacial electrical resistance would increase the cost. Each of the plurality of gas-liquid permeable layers has pores and is permeable to a gas and/or liquid. The titanium laminate used as a porous transport layer in the PEM-type water electrolysis device may be such that the gas and/or liquid can pass through in the lamination direction (sheet thickness direction) as well as in other directions such as a direction perpendicular to the laminate direction.

One laminate surface of the titanium laminate is formed by a gas-liquid permeable layer making up a portion of the one laminate surface side (hereinafter also referred to as the "one-side gas-liquid permeable layer"), and this laminate surface corresponds to the surface of the one-side gas-liquid permeable layer. The one-side gas-liquid permeable layer is a porous layer. The porous layer is formed by titanium powders bonded together and has a sponge-like three-dimensional network structure with pores formed between the bonded titanium powders. By forming the one-side gas-liquid permeable layer as the porous layer having the three-dimensional network structure described above, one laminate structure tends to have numerous minute pore openings as described below.

The average value of the areas of the pores opening to the one laminate surface is 4 µm² or more and 17 µm² or less. When the pores opening to the one laminate surface have relatively small areas, the laminate surface can be regarded as generally smooth one, and damage to the electrolyte membrane in the PEM-type water electrolysis device can be effectively suppressed. From this viewpoint, the average value of the areas of the pores on the one laminate surface is preferably 4 µm² or more and 10 µm² or less. If the average value of the areas of the pores on the one laminate surface is too small, the air and/or liquid permeability may decrease. Conversely, if the average value of the areas of the pores on the one laminate surface is too large, the electrolyte membrane may locally intrude into the pores, causing large deformation near the pores and possibly damaging the membrane. From the same viewpoint, the standard deviation value of the areas of the pores on the laminate surface is preferably 20 µm² or less, more preferably from 3 µm² to 20 µm², and even more preferably from 5 µm² to 17 µm². A small standard deviation value means that most of the pores on the one laminate surface are of the desired fine size.

On the one laminate surface, the number of pores present within a rectangular region having an area of 22,000 µm² and an aspect ratio of 4:3 (length:width) is 120 or more, preferably 140 or more, and more preferably 150 or more. The presence of many fine pores on the one laminate surface as described above enables the laminate to achieve smoothness while maintaining the required air and/or liquid permeability. The number of pores present within the above rectangular region on the one laminate surface is not limited, but it may be, for example, 400 or fewer, or 300 or fewer.

The other laminate surface of the titanium laminate refers to the surface located on the back or opposite side of the one laminate surface, and is formed by a gas-liquid permeable layer (hereinafter also referred to as the "other-side gas-liquid permeable layer") making up the portion on the other laminate surface side. In other words, the other laminate surface corresponds to the surface of the other-side gas-liquid permeable layer.

To enhance the air and/or liquid permeability of the titanium laminate, the average value of the areas of the pores on the other laminate surface is preferably three times or more, more preferably five times or more, and still more preferably seven times or more the average value of the areas of the pores on the one laminate surface. By forming the other laminate surface side from a gas-liquid permeable layer having larger pores, the gas and/or liquid can more easily flow through the interior of the titanium laminate. The upper limit of the average value of the areas of the pores opening to the other laminate surface is not particularly limited, provided that the laminate has sufficient strength to be incorporated and used in, for example, the PEM-type water electrolysis device. As a non-limiting example, the average value of the areas of the pores opening to the other laminate surface may be 200,000 times or less, 10,000 times or less, 1,000 times or less, 500 times or less, or 100 times or less that of the areas of the pores opening to the one laminate surface. Since expanded metal, mesh, or punched metal described later may have pores large enough to be visible to the naked eye, the upper limit of the average value of the areas of the pores opening to the other laminate surface may be as high as 200,000 times that of the areas of the pores opening to the one laminate surface.

The gas-liquid permeable layer on the other side is not limited to a porous layer having a three-dimensional network structure, as long as the average value of the areas of the pores on the other laminate surface falls within a predetermined range. For example, it may be formed as an expanded metal layer, a mesh layer, or a perforated metal layer having regularly arranged pores with a certain size extending through the thickness direction. From the viewpoint of controlling the flow of the gas or liquid to some extent by gradually increasing the sizes of the pores within the titanium laminate, it is preferable that the gas-liquid permeable layer on the other side also be a porous layer. However, even in such a case, the production of the titanium laminate can use porous materials having different properties or obtained by different production methods as the gas-liquid permeable materials for the respective gas-liquid permeable layers on one side and the other side, so that the average value of the areas of the pores on the other laminate surface becomes three times or more that of the areas of the pores on the one laminate surface. The porous layer serving as the gas-liquid permeable layer on the other side may be formed not only from titanium powders bonded together, but also from titanium fibers bonded together to form a nonwoven three-dimensional network or mesh structure. A porous material having a three-dimensional network structure produced by sintering fiber raw materials has a nonwoven form and surface protrusions, but is characterized by having relatively large pores and a certain degree of strength. Therefore, when a sintered fiber material is used as the gas-liquid permeable material at a position that is not in contact with the electrolyte membrane, excellent air and/or liquid permeability can be easily ensured while maintaining the desired strength.

The average value and standard deviation value of the areas of the pores opening to the laminate surface, as well as the number of pores within a predetermined rectangular region, are measured using a scanning electron microscope (Keyence VHX-D510 ultra-deep multi-angle lens). More specifically, for the laminate surface on one side, SEM images are acquired at magnifications of 2000 for a rectangular region having an area of 22,000 µm² and an aspect ratio of 4:3 on the laminate surface. For the laminate surface on the other side, the aspect ratio is set to 4:3 as described above, and the observation magnification and surface area are adjusted according to the pore size on the other laminate surface. Specifically, the magnification and surface area are set so that the number of pores observed on the other laminate surface falls within the range of 100 to 1000. In particular, when the other side is a porous layer, a small-particle removal process and hole-filling process described below are performed for pore identification, so that capturing images within the above range of pore numbers enables a more accurate comparison of the average values of the areas of the pores between the laminate surfaces on one side and the other side. When the other side is a porous layer, observation magnifications of 900 may be preferred. SEM image analysis is then performed using a scanning electron microscope, wherein half of the maximum detected luminance value of the SEM image is set as the threshold, and a closed region having a luminance in the range of 0 to the threshold value is regarded as one pore. At this time, a binarization process may be applied to the SEM image if necessary. After binarization, a small-particle removal process (processing to black pixels after binarization) is performed for closed regions of 50 pixels or less, followed by a hole-filling process (processing to white pixels after binarization) for closed regions of 50 pixels or less. Using the data, the number and area of each pore are calculated, and the standard deviation value is obtained as the square root of the variance. Such SEM image analysis is performed for five rectangular regions on the laminate surface that are at least partially offset from each other, and the average value of the areas of the pores and the average number of pores in those rectangular regions are determined to be the average value of the areas of the pores, the standard deviation value, and the number of pores within the rectangular region on the laminate surface, respectively. In the case where the laminate surface is square or rectangular in plan view, the five rectangular regions described above are located at the center and at the four corners.

The thickness of the titanium laminate in sheet form (total thickness including all gas-liquid permeable layers) may be 40 µm or more and 1000 µm or less. For example, such a titanium laminate having a relatively large thickness may be required for the porous transport layer of the PEM-type water electrolysis device. On the other hand, if the thickness is too large, the PEM-type water electrolysis device may become larger in size. The thickness of the titanium laminate may be, for example, 700 µm or less, 400 µm or less, or 350 µm or less, while it may also be 40 µm or more, or 80 µm or more.

The thickness of the titanium laminate is measured at five points-four at the periphery and one at the center of the titanium porous body-using, for example, a digital thickness gauge such as Mitutoyo Model No. 547-321, having a flat-type probe with a diameter of 10 mm and a measurement accuracy of 0.01 mm. The average of these five measurements is taken as the laminate thickness. If the titanium porous body in sheet shape is rectangular in plan view, the above four peripheral points correspond to the four corners.

The thickness of the gas-liquid permeable layer on one side is preferably 500 µm or less, more preferably 40 µm to 400 µm, still more preferably 40 µm to 300 µm, and most preferably 40 µm to 200 µm. Since the gas-liquid permeable layer on one side is composed of a porous layer having small pores, an excessive thickness may reduce the overall air and/or liquid permeability of the titanium laminate. On the other hand, by increasing the thickness of the gas-liquid permeable layer on one side to a certain extent, the corresponding porous material can ensure sufficient strength after sintering during production, and the gas-liquid permeable layer becomes less susceptible to cracking when it is pressed against the electrolyte membrane together with other gas-liquid permeable layers. The gas-liquid permeable layer on one side preferably has the smallest thickness among the plurality of gas-liquid permeable layers. By making the thickness of the gas-liquid permeable layer on one side, which has small pores and is less permeable to gas or liquid, so as to be the thinnest, the air and/or liquid permeability of the titanium laminate can be significantly improved.

The thickness of the gas-liquid permeable layer on the other side is preferably in the range of 100 µm to 960 µm. By increasing the thickness of the gas-liquid permeable layer on the other side to some extent, the air and/or liquid permeability can be further improved, and by avoiding excessive thickness, miniaturization of the water electrolyzer may be achieved and the electrolysis efficiency per unit area may be enhanced.

The thickness of each gas-liquid permeable layer is measured by observing and measuring the thicknesses at five points on a cross section in a thickness direction of a resin-embedded and polished titanium laminate using SEM, and the average value of these measurements is adopted. Since the functions required for each gas-liquid permeable layer in the titanium laminate differ, portions where differences in pore size can be observed in the lamination direction are identified, and the thickness of each gas-liquid permeable layer is determined from SEM observations of those portions.

The surface area of the titanium laminate in sheet form, as viewed in plan view, can be appropriately determined depending on various conditions and is not particularly limited; for example, it may be 70 mm² or more, 600,000 mm² or less, or preferably from 10,000 mm² to 600,000 mm². The term "sheet shape" refers to a plate-like or foil-like shape having a small thickness relative to its planar dimensions, and the planar shape is not particularly limited.

The titanium laminate may be composed of two gas-liquid permeable layers in which the gas-liquid permeable layers on one side and on the other side are directly bonded at their titanium bonding surfaces. Alternatively, one or more gas-liquid permeable layers may be provided as an intermediate layer between the gas-liquid permeable layers on one side and on the other side. One or more of the gas-liquid permeable layers making up the intermediate layer may be a porous layer, or may be an expanded metal layer, mesh layer, or perforated metal layer. When each of the gas-liquid permeable layers is a porous layer, the flow of the gas and/or liquid can be controlled to some extent by gradually increasing the pore size within the titanium laminate.

### (Production Method)

To produce the titanium laminate described above, first a plurality of gas-liquid permeable materials corresponding to the multiple gas-liquid permeable layers of the titanium laminate are prepared. Among these, at least the gas-liquid permeable material that forms the one laminate surface (the material for the gas-liquid permeable layer on one side) is a porous material having a thickness of 500 µm or less. At least one of the other gas-liquid permeable materials may be an expanded metal material, a mesh material, or a perforated metal material, but preferably is a porous material.

Expanded metal, mesh, or perforated metal materials that can be used as gas-liquid permeable materials are commercially available and can be obtained by purchase. The porous material may be commercially available, or it can be produced in the manner described below.

In one example of a method for producing the porous material, a paste preparation step, a drying step, a debinding step, and a sintering step are carried out in this order. This method can be referred to as a paste method.

In the paste preparation step, titanium powders such as pulverized powders (e.g., hydrogenated-dehydrogenated titanium powder, hydrogenated titanium powder) or spherical atomized powders, an organic binder and an organic solvent, are mixed together using a mixer equipped with an agitator, a rotary mixer, or a three-roll mill to prepare a paste. At this time, pulverization may also be performed using a vibration mill, bead mill, or other pulverizing mixer.

The titanium powder contained in the paste preferably has an average particle size of 25 µm or less, more preferably 18 µm or less. By using titanium powder having such a small particle size and, as described below, employing a specified dispersant, a porous material with a smooth surface can be obtained. The average particle size of the titanium powder may be 5 µm or more, and more preferably 10 µm or more. The average particle size refers to the particle diameter at which the cumulative particle size distribution on a volume basis reaches 50%, as measured by the laser diffraction scattering method.

As the organic binder used for the paste, various binders can be appropriately selected as needed. Examples include methyl cellulose-based, polyvinyl alcohol-based, ethyl cellulose-based, acrylic-based, and polyvinyl butyral-based binders. Organic binders exhibiting hydrophobic properties are preferred. However, this invention is not limited to these examples. The organic solvent may be, for example, an alcohol such as ethanol, isopropanol, terpineol, and butyl carbitol. As an example, the organic binder may be polyvinyl butyral and the organic solvent may be isopropyl alcohol. The paste may further contain a plasticizer such as glycerin or ethylene glycol, and/or a surfactant such as an alkylbenzene sulfonate.

When producing the porous material to be used for the gas-liquid permeable layer on one side, the paste should contain no water as a solvent. It is also preferable that the paste does not contain any foaming agent. It should be noted that the paste may be free of water as a solvent, and the inclusion of water that may unintentionally be mixed into the paste, such as moisture absorption, is permissible. When a paste containing water and/or a foaming agent is used to produce a porous material, large pores are formed during the producing process, making it impossible to achieve the desired pore size.

Regardless of the case of producing a porous material for the one-side gas-liquid permeable layer, the above paste is applied relatively thinly onto a substrate and dried in a drying step, for example, at a temperature of 90°C or higher and 165°C or lower for a period of 5 minutes or longer and 300 minutes or shorter. A debinding step is then carried out. In the debinding step, the green body is heated, for example, at a temperature of 300°C or higher and 450°C or lower for a period of 3 hours or longer and 12 hours or shorter, thereby volatilizing and removing the organic binder.

Thereafter, a sintering step is carried, for example, the titanium powder is sintered by heating, for example, in a vacuum of 1.0 × 10⁻² Pa or less, or in an inert atmosphere such as Ar or He, at a temperature of 700°C or higher and 1000°C or lower for a period of 1 hour or longer and 4 hours or shorter. As a result, a porous material is obtained.

Another example of the method for producing the porous material, though details are omitted here, is a "dry method" in which titanium powder or titanium fiber is dropped and deposited in a gas such as air or in a vacuum, and then sintered by heating in a reduced-pressure atmosphere such as vacuum.

When the porous material used for the one-side gas-liquid permeable layer is produced by the above paste method, the resulting porous material may have an average value of areas of pores opening to that surface of 5 µm² or more and 17 µm² or less, a standard deviation of areas of pores of 20 µm² or less, and a number of pores within a rectangular region having an area of 22,000 µm² and an aspect ratio of 4:3 of 250 or more. Moreover, the standard deviation value of the areas of the pores opening to the surface of the porous material may be in the range of 3 µm² to 20 µm², particularly 10 µm² to 20 µm². When such a porous material is used as the gas-liquid permeable material forming the one laminate surface and subjected to the bonding step described later, the pore morphology may change, and the average value and the number of the areas of the pores opening to the one laminate surface in the gas-liquid permeable layer on one side of the titanium laminate may become the above values.

After preparing multiple gas-liquid permeable material, a bonding step is carried out to join and laminate them together. In the bonding step, more specifically, the titanium bonding surfaces of the respective gas-liquid permeable materials are brought into contact with each other. If necessary, the multiple gas-liquid permeable materials may be partially fixed together by welding or the like at this stage. However, since fixation such as welding may partially narrow or eliminate the pores of the gas-liquid permeable material or reduce its thickness, it is preferable to simply overlap and contact the multiple gas-liquid permeable materials without fixation.

Then, in this state, the gas-liquid permeable materials are sandwiched between the opposing flat pressing surfaces of pressing members from both sides and pressed while being heated at a temperature of 810°C or higher and 1100°C or lower, preferably 850°C or higher and 1000°C or lower. As a result, the multiple gas-liquid permeable materials are bonded together at their titanium bonding surfaces by solid-phase diffusion and laminated to form a titanium laminate. It should be noted that the above temperature refers to the maximum temperature reached during heating.

In the bonding step, it is important to use, as the pressing members such as setters, pressing members whose pressing surfaces are coated with boron nitride particles. When pressing members made of graphite or the like without applying such coating, they may react with titanium during heating in the bonding step, and impurities such as TiC may be formed on the one laminate surface of the titanium laminate that is particularly smoother and has a larger contact area. On the other hand, if pressing members made entirely of boron nitride are used, the boron nitride having self-lubricating properties may peel off and adhere to the laminate surface, which may cause roughening of the surface when it is released. In contrast, when a pressing member whose pressing surface is coated with boron nitride particles is used, the formation of impurities on the laminate surface can be suppressed, and even if boron nitride particles adhere to the laminate surface, they can be easily removed by washing with water. Furthermore, when such pressing members coated with boron nitride particles are used, the titanium laminate can be easily separated from the pressing members after the bonding step.

Prior to performing the bonding step, the pressing surfaces of the pressing members may be coated with boron nitride particles by using a coating agent in which boron nitride particles are dispersed in an organic solvent, for example by spraying the coating agent onto the pressing surfaces and then drying it. The particle size of the boron nitride particles used for the coating is preferably 9 µm or less, more preferably 5 µm or less, and even more preferably 3 µm or less. The particle size of the boron nitride particles refers to a diameter of a circle having an area equal to an average area of the particles as determined from captured images. From the viewpoint of suppressing agglomeration of boron nitride particles adhering to the pressing surfaces after coating, it is preferable to use an organic solvent for the coating agent, rather than water. This prevents uncoated portions from occurring on the pressing surfaces due to agglomerated particle formation to attach the pressing surfaces to the laminate surface, and also preventing agglomerated particles from penetrating into the laminate and affecting air or liquid permeability.

Preferably, the pressing members are made of graphite, and their pressing surfaces are coated with boron nitride particles as described above. The pressing members made of graphite are resistant to peeling even under the high temperature conditions of the bonding step. Furthermore, boron nitride particles adhere well to the pressing surfaces of the pressing members made of graphite.

For the pressing and heating time during the bonding step, the period during which the temperature is 810°C or higher, may be, for example, from 30 minutes to 8 hours. The bonding step may also be carried out in a reduced-pressure or inert atmosphere.

### [Examples]

Next, the sheet-shaped titanium laminate according to this invention was experimentally produced, and its effects were confirmed as described below. However, descriptions herein are merely for illustration, and are not intended to be limited thereto.

As gas-liquid permeable materials having pores through which a gas and/or liquid can pass, three types of porous materials with different characteristics (WEBTi-K, WEBTi-T, and WEBTi-S (WEBTi is registered trademark), manufactured by Toho Titanium Co., Ltd.) and an expanded metal material (Fine Metal Small Mesh BD20 manufactured by Sanki Seisakusho Co., Ltd.) were prepared. All of these materials are made of titanium. WEBTi-K was produced by the paste method, WEBTi-T was produced by the dry method using titanium powder, and WEBTi-S was produced by the dry method using titanium fiber. In addition, WEBTi-K and WEBTi-T each have a sponge-like three-dimensional network structure, while WEBTi-S has a nonwoven fabric-like three-dimensional network structure.

Two types among the above gas-liquid permeable materials were selected, simply overlapped so that their titanium bonding surfaces were in contact with each other, and placed between pressing members from both sides. They were then heated while being pressed, thereby bonding the titanium bonding surfaces together to form a laminated structure. The pressing force was applied by placing a weight on the upper pressing member, and was in the range of 0.14 N/cm² to 0.35 N/cm². Heating was performed by placing the gas-liquid permeable materials together with the pressing members in a furnace, at 1000°C for 1 hour in Examples 1 to 4 and Comparative Examples 1 and 2, at 1200°C for 1 hour in Comparative Example 3, and at 775°C for 1 hour in Comparative Example 4.

Here, graphite setters were used as the pressing members, and their pressing surfaces were coated with boron nitride particles by spraying the predetermined coating agent and then drying it. In Examples 1 to 4 and Comparative Examples 3 and 4, an organic solvent-based coating agent (Whitey Release N, manufactured by Odec Co., Ltd.) was used. This coating agent contained 1 to 5 mass % of boron nitride particles, and 65 mass % or more of dimethyl ether as an organic solvent, and no water. In Comparative Example 1, a water-based coating agent (BN Release, manufactured by Odec Co., Ltd.) was used. This water-based coating agent contains 50 to 60 mass % of water and 35 to 40 mass % of dimethyl ether. When the water-based coating agent was used, the pressing surfaces were heated to about 100 °C after spraying in order to dry it. In Comparative Example 2, no coating was applied to the pressing surfaces. In all Comparative Examples 1 to 4, WEBTi-K and WEBTi-T were used as the two gas-liquid permeable materials. In all of Examples 1 to 4 and Comparative Examples 1 to 4, WEBTi-K was used as the porous gas-liquid permeable material forming one laminate surface.

As a result, titanium laminates were successfully produced in Examples 1 to 4. On the other hand, in Comparative Example 1, the agglomerated boron nitride particles penetrated into the titanium laminate because the water-based coating agent was used on the pressing surfaces. In Comparative Example 2, since no coating was applied to the pressing surfaces, the pressing surfaces bonded to the laminate surface, and they could not be separated. In Comparative Example 3, although the pressing surfaces were coated, the bonding temperature was too high, causing the pressing surfaces and the laminate surface to adhere together and preventing proper separation. In Comparative Example 4, the bonding temperature was too low, resulting in weak bonding between the gas-liquid permeable materials. Accordingly, titanium laminates could not be obtained in Comparative Examples 1 to 4.

For each titanium laminate, the thickness, electrical conductivity, oxygen content, the average value and standard deviation value of the areas of the pores on the laminate surface, and the number of pores within the rectangular region were measured. The results are shown in Table 1. The standard deviation value of the areas of the pores is described later. The methods for measuring the thickness, the average value and standard deviation value of the areas of the pores, and the number of pores within the rectangular region were as described previously. In Example 3, the pores of the gas-liquid permeable layer formed of the expanded metal material were too large as compared with those of WEBTi-S in Example 1, so that the average value of the areas of the pores could not be measured. Therefore, in Table 1, the number of pores for the expanded metal layer in Example 3 is indicated as "0", which does not represent the actual number of pores.

The electrical conductivity of each laminate surface was measured using a low-resistivity meter (Loresta GP MCP-T610, manufactured by Mitsubishi Analytic Co., Ltd.) by the four-probe method, with the surface to be measured positioned upward. The probe checker MCP-TRPS RMH311 was used for the laminate surface of the expanded metal, WEBTi-T, or WEBTi-S, while the probe checker MCP-TP06P RMH112 was used for the laminate surface of WEBTI-K. It is considered that if the titanium bonding surfaces of the gas-liquid permeable layers are sufficiently bonded to each other, the electrical conductivity will be high. Furthermore, when the conductivity is high, each gas-liquid permeable layer is strongly bonded, and therefore the laminate is presumed to exhibit excellent mechanical strength. The above electrical conductivity was measured on both sides of the produced titanium laminate, and the laminates were regarded as acceptable when both sides exhibited a conductivity of 3.2 × 10³ S/cm or higher. In addition, prior to bonding of the gas-liquid permeable materials, the conductivity of the upper gas-liquid permeable material was measured while two such materials were overlapped with each other, and those results are also shown in Table 1.

In Comparative Example 4, the bonding temperature was too low, so that the titanium bonding surfaces of the gas-liquid permeable layers did not sufficiently bond together, resulting in a low conductivity of 2.5 × 10³ S/cm on the WEBTi-K side. Accordingly, it was determined that the titanium laminate could not be successfully produced.

**[Table 1]**

| Example 1 | | Before Bonding | | | | After Bonding | | | | | |
|---|---|---|---|---|---|---|---|---|---|---|---|
| | | Thickness (mm) | Conductivity (10³ x S/cm) | Average Pore Area (µm²) | Number of Pores | Thickness (mm) | Thickness per Layer (mm) | Conductivity (10³ x S/cm) | Average Pore Area (µm²) | Number of Pores | Oxygen Content (mass%) |
| Base Material | WEBTi-K | 0.108 | 1.2 | 8.6 | 313 | 0.358 | 0.086 | 3.7 | 8.0 | 195 | 0.8 |
| Joining Material | WEBTi-S | 0.312 | 2.3 | 2752.1 | 691 | | 0.272 | 3.55 | 2699.0 | 730 | |

| Example 2 | | Before Bonding | | | | After Bonding | | | | | |
|---|---|---|---|---|---|---|---|---|---|---|---|
| | | Thickness (mm) | Conductivity (10³ x S/cm) | Average Pore Area (µm²) | Number of Pores | Thickness (mm) | Thickness per Layer (mm) | Conductivity (10³ x S/cm) | Average Pore Area (µm²) | Number of Pores | Oxygen Content (mass%) |
| Base Material | WEBTi-K | 0.112 | 1.1 | 7.3 | 319 | 0.456 | 0.089 | 4.3 | 6.5 | 214 | 0.8 |
| Joining Material | WEBTi-T | 0.387 | 4.7 | 28.6 | 430 | | 0.367 | 6.52 | 34.4 | 366 | |

| Example 3 | | Before Bonding | | | | After Bonding | | | | | |
|---|---|---|---|---|---|---|---|---|---|---|---|
| | | Thickness (mm) | Conductivity (10³ x S/cm) | Average Pore Area (µm²) | Number of Pores | Thickness (mm) | Thickness per Layer (mm) | Conductivity (10³ x S/cm) | Average Pore Area (µm²) | Number of Pores | Oxygen Content (mass%) |
| Base Material | WEBTi-K | 0.108 | 1.3 | 7.7 | 289 | 0.279 | 0.086 | 3.6 | 9.5 | 149 | 1.0 |
| Joining Material | Expanded Metal | 0.230 | 1.3 | Not Measurable | 0 | | 0.193 | 3.24 | Not Measurable | 0 | |

| Example 4 | | Before Bonding | | | | After Bonding | | | | | |
|---|---|---|---|---|---|---|---|---|---|---|---|
| | | Thickness (mm) | Conductivity (10³ x S/cm) | Average Pore Area (µm) | Number of Pores | Thickness (mm) | Thickness per Layer (mm) | Conductivity (E+3S/cm) | Average Pore Area (µm²) | Number of Pores | Oxygen Content (mass%) |
| Base Material | WEBTi-K | 0.107 | 1.4 | 8.3 | 316 | 0.322 | 0.086 | 5.66 | 5.8 | 192 | 1.2 |
| Joining Material | WEBTi-K | 0.266 | 1.7 | 38.6 | 551 | | 0.236 | 5.46 | 41.4 | 342 | |

Furthermore, the standard deviation value of the areas of the pores on the one laminate surface of each of the titanium laminates in Examples 1 to 4 was measured by the above-described method. The results were 11.1 µm² for Example 1, 10.1 µm² for Example 2, 13.3 µm² for Example 3, and 7.6 µm² for Example 4. In addition, the standard deviation value of the areas of the pores on the surface of the porous material forming the one laminate surface before bonding, which was used in the production of the titanium laminates in Examples 1 to 4, was 15.3 µm² for Example 1, 12.4 µm² for Example 2, 11.9 µm² for Example 3, and 14.8 µm² for Example 4.

According to this invention, it is possible to suppress damage to the electrolyte membrane, and it has been suggested that excellent gas and/or liquid permeability can also be achieved.

## Claims

1. A titanium laminate in sheet shape, the titanium laminate comprising:
a plurality of gas-liquid permeable layers made of titanium, each having pores through which a gas and/or a liquid can pass, the gas-liquid permeable layers being laminated by bonding adjacent titanium bonding surfaces together in a lamination direction;
wherein at least a gas-liquid permeable layer forming one laminate surface of the plurality of the gas-liquid permeable layers is a porous layer having a thickness of 500 µm or less,
wherein, on the one laminate surface, an average value of areas of pores opening to the laminate surface is 4 µm² or more and 17 µm² or less, a standard deviation value of the areas of the pores is 20 µm² or less, and a number of the pores present within a rectangular region having an area of 22,000 µm² and an aspect ratio of 4:3 is 120 or more, and
wherein, on other laminate surface located on a back side of the one laminate surface, an average value of areas of pores opening to the other laminate surface is three times or more the average value of the areas of the pores on the one laminate surface.

2. The titanium laminate according to claim 1, wherein the gas-liquid permeable layer forming the one laminate surface has the smallest thickness among the plurality of gas-liquid permeable layers.

3. The titanium laminate according to claim 1 or 2, wherein each of the plurality of gas-liquid permeable layers is a porous layer.

4. The titanium laminate according to claim 1 or 2, wherein the titanium laminate has a titanium content of 97 mass% or more.

5. The titanium laminate according to claim 1 or 2, wherein the titanium laminate has an oxygen content of 0.4 mass% or more and 2.0 mass% or less.

6. The titanium laminate according to claim 1 or 2, wherein the gas-liquid permeable layer forming the one laminate surface has a thickness of 500 µm or less.

7. A method for producing a titanium laminate in sheet shape, the method comprising:
a bonding step of using a plurality of titanium gas-liquid permeable materials each having pores through which a gas and/or a liquid can pass and including at least a gas-liquid permeable material forming one laminate surface that is a porous material having a thickness of 500 µm or less , and heating the gas-liquid permeable materials to a temperature of 810 °C or higher and 1100 °C or lower while being pressed by sandwiching them between pressing surfaces of opposing pressing members with titanium bonding surfaces of the plurality of gas-liquid permeable materials in contact with each other, thereby bonding the plurality of gas-liquid permeable materials together at the titanium bonding surfaces,
wherein, in the bonding step, each of the pressing members used has a pressing surface coated with boron nitride particles by means of a water-free coating agent.

8. The method for producing a titanium laminate according to claim 7, wherein a coating agent comprising boron nitride particles dispersed in an organic solvent is used for a coating of the pressing surfaces.

9. The method for producing a titanium laminate according to claim 7 or 8, wherein, in the bonding step, graphite pressing members having a coating on the pressing surfaces are used as the pressing members.

10. The method for producing a titanium laminate according to claim 7 or 8, wherein, before bonding in the bonding step, on a surface of the porous material of at least the gas-liquid permeable material forming the one laminate surface, an average value of areas of pores opening to the surface is 5 µm² or more and 17 µm² or less, a standard deviation value of the areas of the pores is 20 µm² or less, and a number of the pores present within a rectangular region having an area of 22,000 µm² and an aspect ratio of 4:3 is 250 or more.
